# EUROPEAN PATENT APPLICATION

(11) **EP 4 324 544 A1**
(43) Date of publication of application: **21.02.2024**
(21) Application number: 23188171.5
(22) Date of filing: 27.07.2023
(51) Int. Cl.: B01D 46/00, B01D 46/10, B01D 46/52

(54) **MOUNTING PLATE, FILTER DEVICE AND MOUNTING METHOD**

(30) Priority: 17.08.2022 CN 202210984851
(71) Applicant: Carl Freudenberg KG, 69469 Weinheim (DE)
(72) Inventor: Feng, Dandan, Suzhou City, 215100 (CN); Wu, Qiong, Suzhou, 215011 (CN); Chen, Yanpeng, Suzhou, 215100 (CN)

(57) **Abstract**

Embodiments of the present application relate to a mounting panel (14) that is capable of mounting a filter element (10) to a housing (12), a filter device (40) that is mountable to the housing (12), and a mounting method (50). The mounting panel (14) includes: a body part (22); a connecting part (16) located at an end side of the body part (22) and being detachably connectable to the filter element (10); and a mounting part (18) configured on the body part (22) and being detachably engageable with the housing (12). Embodiments of this application can be beneficial for cost reduction, environmental protection, and energy conservation, etc.

## Description

### TECHNICAL FIELD

The present application relates to filtration field and, in particular, to a mounting panel and a filter device.

### BACKGROUND

Existing filter elements are typically mounted to a housing by means of an attachment adhered on such filter elements. The attachment must also be replaced when the filter element is replaced, and cannot be reused, which involves a relatively high cost of replacement. Moreover, the adhering process is complicated, and the related energy consumption is not low. In addition, the adhesive required for adhesion can have adverse effects on the environment, which is not favorable for environmental protection.

Therefore, improvements are desirable.

### SUMMARY

An object of the present application is to provide an improved mounting panel, a filter device, and a mounting method.

To the above object, an aspect of embodiments of the present application relates to a mounting panel that is capable of mounting a filter element to a housing. The mounting panel can comprise a body part, a connecting part located at an end side of the body part and being detachably connectable to the filter element, and a mounting part configured on the body part and being detachably engageable with the housing.

In some embodiments, the body part and the connecting part are such arranged that a substantially U-shaped or L-shaped configuration is formed.

In some embodiments, the connecting part extends in a direction substantially perpendicular to the body part.

In some embodiments, the connecting part comprises a bending part located at an end side thereof and extending in a direction substantially parallel to the body part.

In some embodiments, the mounting part comprises at least one hook protruded from the body part along a direction away from the connecting part.

In some embodiments, the hook comprises an extending part extending in a direction away from the connecting part and a cantilever extending substantially perpendicular to the extension part.

In some embodiments, the hook comprises a protrusion on the cantilever.

In some embodiments, the cantilever is configured to be displaceable relative to the extending part and the body part.

In some embodiments, the cantilever is elastically deformable.

In some embodiments, the body part comprises a through hole configured to allow the cantilever and the protrusion to pass through.

In some embodiments, the number of the hooks is greater than or equal to 2.

Another aspect of the embodiments of the present application relates to a filter device mountable to a housing, the filter device comprising a filter element and the mounting panel as described in the present application.

In some embodiments, the filter element comprises a filter part and a frame on the filter part, the connecting part being nestable engageable with the frame.

In some embodiments, the connecting part is interferentially engageable with the frame.

In some embodiments, the connecting part and the body part are both nestably engageable with the frame.

Yet another aspect of the embodiments of the present application relates to a filter device mountable to a housing. The filter device comprises a filter element comprising a filter part and a frame on the filter part; and a mounting panel comprising a body part, a connecting part located at an end side of the body part and being detachably connectable to the filter element, and a mounting part configured on the body part and being detachably engageable with the housing, the connecting part comprising a bending part located at an end part thereof and extending substantially parallel to the body part, the frame comprising a protruding part nestable among the body part, the connecting part and the bending part.

Yet another aspect of the embodiments of the present application relates to a mounting method. The method comprises the steps of: providing a mounting panel as described in the present application; and detachably connecting the connecting part of the mounting panel to a filter element and detachably engaging the mounting part of the mounting panel to a housing.

In some embodiments, the housing comprises an engaging groove, and the engaging groove comprises a guiding part, a receiving part in communication with the guiding part, and a neck part in communication with the guiding part and with the receiving part. The neck part is smaller in size than the guiding part and the receiving part. In these and other embodiments, the mounting method comprises: entering the mounting part into the housing from the guiding part, deforming and passing the mounting part through the neck part till it enters into the receiving part, and recovering the deformation of the mounting part so as to engage the mounting part with the engaging groove.

Technical features and solutions of the embodiments in the present application can be combined without restriction so long as the combined is technically feasible.

The present application will be further described with reference to accompanying drawings. Same or similar reference numerals can be used in the drawings to refer to same or similar apparatuses, elements, devices, shapes, configurations, methods, steps in different embodiments. Descriptions of same or similar apparatuses, elements, devices, shapes, configurations, methods, steps, features, effects in different embodiments, and descriptions of apparatuses, elements, devices, shapes, configurations, methods, steps, features, effects, etc. same as or similar with those of the prior art can be omitted.

### BRIEF DESCRIPTION OF THE DRAWINGS

FIG. 1 is a schematic exploded view of a mounting panel and a filter element, a housing in some embodiments of the present application.
FIG. 2 is a schematic side view of the mounting panel in FIG. 1.
FIG. 3 is a schematic partial side view of the mounting panel connected to the filter element in FIG. 1.
FIG. 4 is a schematic view of the mounting panel in FIG. 1 as used in one embodiment.
FIG. 5 is a schematic partial enlarged view of the mounting panel in FIG. 1.
FIG. 6 is a schematic view of a filter element in the prior art.
FIG. 7 is a schematic exploded view of a filter device in another aspect of embodiments of the present application.
FIG. 8 is a schematic partial assembled view of the filter device in FIG. 7.
FIG. 9 is a schematic enlarged view of A in FIG. 8.
FIG. 10 is a schematic enlarged view of B in FIG. 3.
FIG. 11 is a schematic flowchart of the mounting method in another aspect of embodiments of the present application.
FIG. 12 is a schematic partial cross-sectional view of the mounting panel and the housing in FIG. 1.
FIG. 13 is a schematic enlarged view of C in FIG. 12.
FIG. 14 is another schematic partial cross-sectional view of the mounting panel and the housing in FIG. 1.

### DETAILED DESCRIPTION

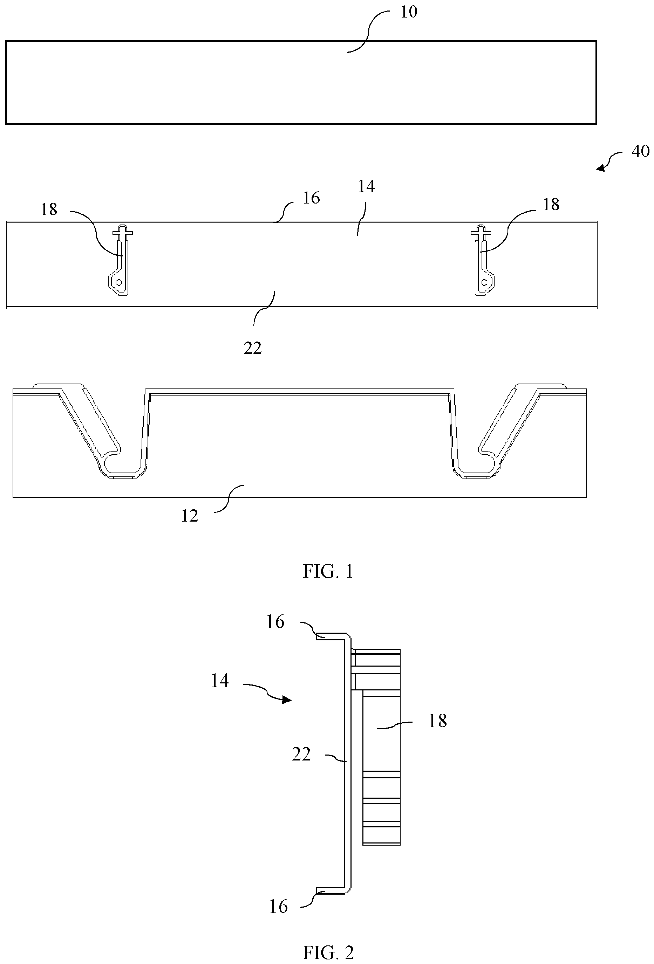

FIG. 1 is a schematic exploded view of a mounting panel, a filter element, and a housing in some embodiments of the present application. As is shown in FIG. 1, an aspect of embodiments of the present application relates to a mounting panel 14 that is capable of mounting a filter element 10 to a housing 12. The mounting panel 14 comprises: a body part 22; a connecting part 16 located at an end side of the body part 22 and being detachably connectable to the filter element 10; and a mounting part 18 configured on the body part 22 and being detachably engageable with the housing 12.

Embodiments of the present application can be beneficial for cost reduction, environmental protection, and energy conservation, etc.

For instance, the mounting panel 14 is detachably connectable to the filter element 10, and when the filter element 10 needs to be replaced at the end of its life, the mounting panel 14 can be disengaged from the used filter element 10 and coupled to a new filter element for continued use. That is, the mounting panel 14 can be reused, and accordingly the demand on mounting panels 14 is much less than the filter elements 10. When the mounting panel 14 comprises a plastic material, the small demand for the mounting panel 14 means a reduction in the amount of plastic to be used, and also means a reduction in the energy consumption of the plastic processing and a reduction in environmental pollution during energy consumption. In the meantime, the mounting panel 14 is detachably connectable with the filter element 10, and an adhering process in existing practice can be omitted, which reduces or avoids use of adhesives, saves cost and energy, and protects environment and the like.

The body part 22 can have a substantially elongated panel shape including two longer sides parallel to each other and two shorter sides parallel to each other and connecting the longer sides. The longer side is longer than the shorter side in length. The connecting part 16 can be provided at an end side of the longer side of the body part 22 and/or on an end side of the shorter side of the body part 22. The length of the connecting part 16 can be equal to the length of the longer side of the body part 22.

FIG. 2 is a schematic side view of the mounting panel in FIG. 1. Referring to FIG. 2, in some embodiments, the body part 22 and the connecting part 16 are arranged so to from a substantially U-shaped or L-shaped configuration.

By doing such, a convenient attachment of the connection part 16 to the filter element 10 can be achieved.

As is shown in FIG. 2, when the connecting parts 16 are provided on two opposite end sides of the body part 22, the body part 22 and the connecting parts 16 are provided in a substantially U-shaped configuration. In the embodiment not shown, when the connecting part 16 is provided on one end side of the body part 22, the body part 22 and the connecting part 16 are provided in a substantially L-shaped configuration.

In some embodiments, the connecting part 16 extends in a direction substantially perpendicular to the body part 22.

By doing such, the connecting part 16 can be facilitated to connect to the filter element 10 in a direction substantially perpendicular to the body part 22.

The connecting part 16 can extend perpendicularly from one or more end sides of the body part 22.

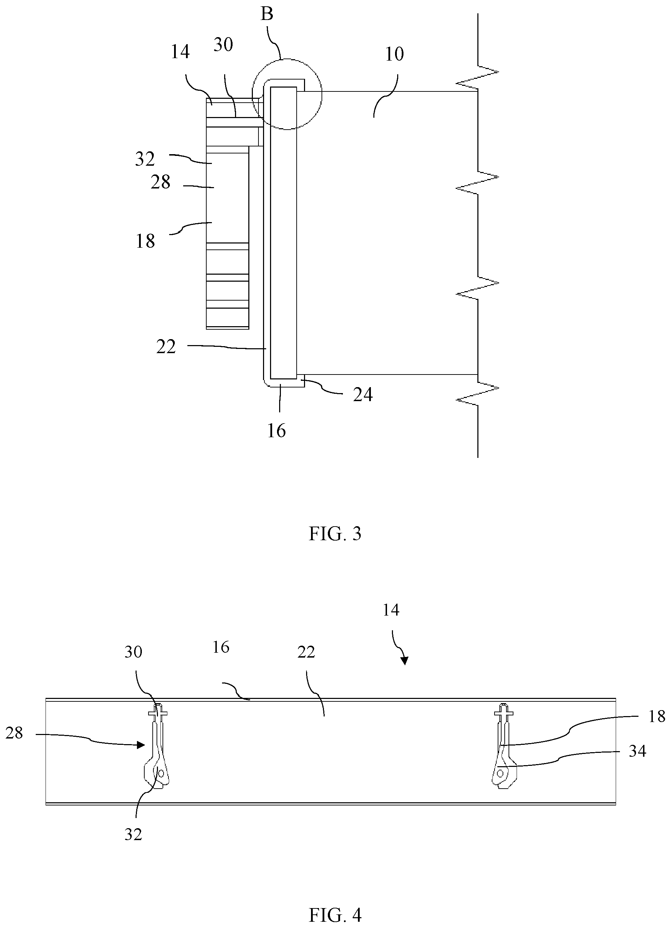

FIG. 3 is a schematic partial side view of the mounting panel connected to the filter element in FIG. 1. Referring to FIG. 3, in some embodiments, the connecting part 16 comprises a bending part 24 located at an end side thereof and extending in a direction substantially parallel to the body part 22.

By doing such, the connecting part 16 can be advantageously connected to the filter element 10 by means of the bending part 24 which is located at the end side thereof and extends in a direction substantially parallel to the body part 22.

The bending part 24 can extend substantially perpendicularly from an end side of the connecting part 16 away from the body part 22. The height of the bending part 24 can be smaller than that of the body part 22.

Depending on the configuration of the housing 12, the mounting part 18 can be provided with a configuration that can couple with the housing 12, including but not limited to a snap, a catch, and the like. In some embodiments, the mounting part 18 comprises at least one hook 28 protruded from the body part 22 along a direction away from the connecting part 16.

In this manner, the mounting part 18 can be facilitated to engage the housing 12 with the hook 28 in a direction away from the connecting part 16.

In some embodiments, the hook 28 can comprise an extending part 30 extending in a direction away from the connecting part 16 and a cantilever 32 extending substantially perpendicular to the extending part 30.

By doing such, the hook 28 can be facilitated to protrude from the body part 22.

The extending part 30 can be perpendicular to the body part 22. The cantilever 32 can be parallel to the body part 22. The extending part 30 can protrude from a position near one longer side of the body part 22. The cantilever 32 can extend from the extending part 30 to the other longer side of the body part 22. The cantilever 32 can be parallel to the shorter side of the body part 22. The length of the cantilever 32 can be less than that of the shorter side of the body part 22 in a direction parallel to each other.

FIG. 4 is a schematic view of the mounting panel in FIG. 1 in a use state. As is shown in FIG. 4, in some embodiments, the hook 28 comprises a protrusion 34 on the cantilever 32.

In this manner, the engagement of the hook 28 with the housing 12 via the protrusion 34 can be facilitated.

The protrusion 34 can be provided at the free end of the cantilever 32. The protrusion 34 can be provided at the end of the cantilever 32 remote from the extending part 30. The protrusion 34 can protrude relative to the rest of the cantilever 32 in a direction parallel to the body part 22. The protrusion 34 is larger in dimension than the rest of the cantilever 32 in a direction parallel to the body part 22. The protrusion 34 can protrude toward or away from the center of the body part 22. The protrusion 34 can include at least two slopes having different inclination directions, and can also include a partially protruding section having a substantially circular shape, a substantially arc shape, a substantially letter-b shape, or the like.

In some embodiments, the cantilever 32 is configured to be displaceable relative to the extending part 30 and the body part 22.

By doing such, the filter element 10 can be easily mounted to the housing 12 without deformation, and the possibility of affecting the filtering function due to deformation of the filter element 10 is reduced or eliminated.

The cantilever 32 is displaceable toward and away from the center of the body part 22. The cantilever 32 is displaceable in a direction parallel to the body part 22.

In some embodiments, the cantilever 32 is elastically deformable.

By doing such, it facilitates the recovery of the cantilever 32 from its displacement.

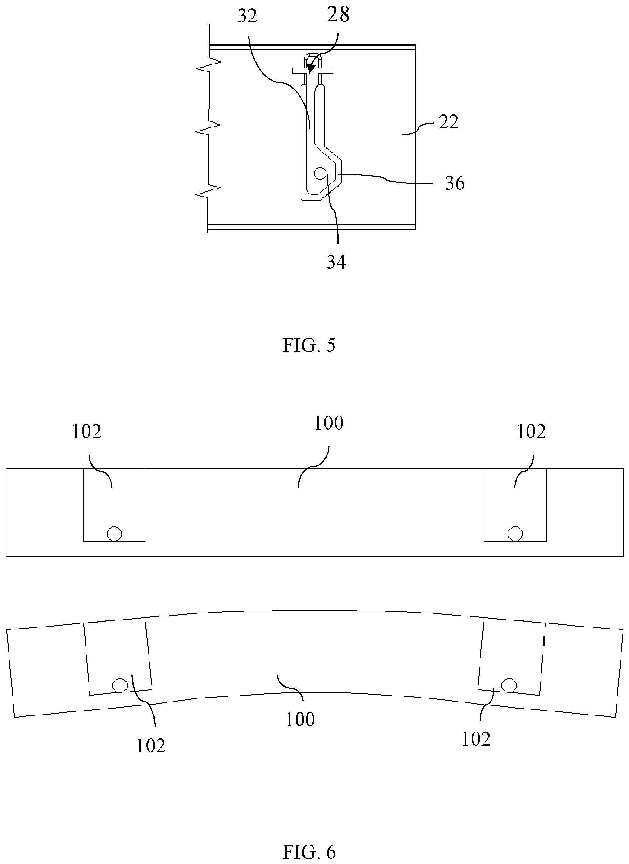

FIG. 5 is a schematic partial enlarged view of the mounting panel in FIG. 1. Referring to FIG. 5, in some embodiments, the body part 22 comprises a through hole 36 configured to allow the cantilever 32 and the protrusion 34 to pass through.

Therefore, the hook 28 can be formed by a male die and a female die directly, avoiding the sliding block design, and simplifying the die.

The through hole 36 can have a shape and configuration corresponding to the cantilever 32 and the protrusion 34 such that the cantilever 32 and the protrusion 34 can pass through the through hole 36. The edge dimension of the through hole 36 can be larger than the outer contour dimension of the cantilever 32 and the protrusion 34, so that the cantilever 32 and the protrusion 34 can pass through the through hole 36.

In some embodiments, the number of the hooks 28 is greater than or equal to 2.

By doing such, the mounting part 18 can be advantageously engaged with the housing 12 by two or more hooks 28 so as to arrive at a more secured and flexible engagement.

The hooks 28 can be spaced apart from each other. When the number of the hooks 28 is equal to 2, the hooks 28 can be respectively arranged nearby the two shorter sides of the body part 22. The distance between one hook 28 and its adjacent shorter side can be less than the distance between the one and the other hooks 28. The protrusions 34 of the two hooks 28 can protrude in the same direction or in two opposite directions with respect to each other. The protrusion 34 of each of the hooks 28 can protrude in a direction towards to the adjacent shorter side.

FIG. 6 is a schematic view of a filter element in the prior art in two states. Referring to FIG. 6, a filter element 100 has two attachments 102 adhered thereto. The attachment 102 is not deformable for mounting the filter element 100. When it is desired to install the filter element 100, it is necessary to convert the filter element 100 from a flat and straight state, see in the upper view, to a bent and deformed state, see in the lower view, so that the attachment 102 can be installed in to the right place. Such deformation of the filter element 100 requires that the material of the filter element 100 has a certain flexibility, which increases the material limitation.

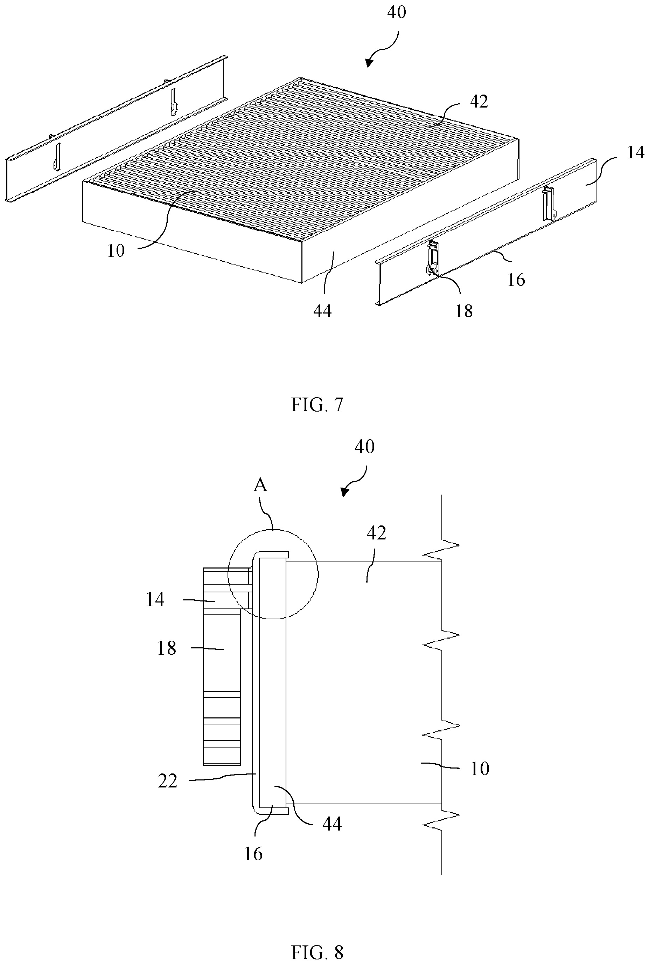

FIG. 7 is a schematic exploded view of a filter device according to another aspect of embodiments of the present application. As shown in FIG. 7, another aspect of the embodiments of the present application relates to a filter device 40 mountable to a housing 12. The filter device 40 comprises a filter element 10 and the mounting panel 14 as described in the instant application.

The filter element 10 can be such useful in automobile filters, household purifiers, electric consumer products (such as dust collectors and projectors) and the like. The filter device 40 can be mounted to the housing 12 by the mounting panel 14. The housing 12 can members or portions corresponding to the filter device 40 in a car filter, a household purifier, an electric consumer product (e.g., a dust collector, a projector) and the like.

In some embodiments, the filter element 10 comprises a filter part 42 and a frame 44 on the filter part 42, and the connecting part 16 is nestably engageable with the frame 44.

By doing such, the connecting part 16 can be easily engaged with the frame 44, and can also be easily disengaged from the frame 44. When the filter element 10 needs to be replaced at the end of its life, the mounting panel 14 can continue to be used in conjunction with a new filter element.

The frame 44 can cover at least the entire outer edge of the undulating end surface of the filter part 42 to avoid leakage and interference with the filtering function of the filter part 42. When the filter part 42 is substantially square, the frame 44 can be disposed around the filter part 42 or at least on both sides of the wavy end surface of the filter part 42, such as the two opposite sides of the filter part 42 opposite to the two mounting panels 14 in FIG. 7. The frame 44 can partially or completely surround the filter part 42. The frame 44 can be one or more outer walls of the filter part 42. When the frame 44 is a plurality of outer walls of the filter part 42, there can be a plurality of mounting panels 14, and each mounting panel 14 corresponds to one of the outer walls. For example, in FIG. 7, the frame 44 includes 2 oppositely disposed outer walls of the filter part 42, there are 2 mounting panels 14, and each mounting panel 14 corresponds to one of the outer walls.

In some embodiments, the connecting part 16 is interferentially engageable with the frame 44.

By doing such, it is advantageous that the connecting part 16 can be firmly engaged with the frame 44.

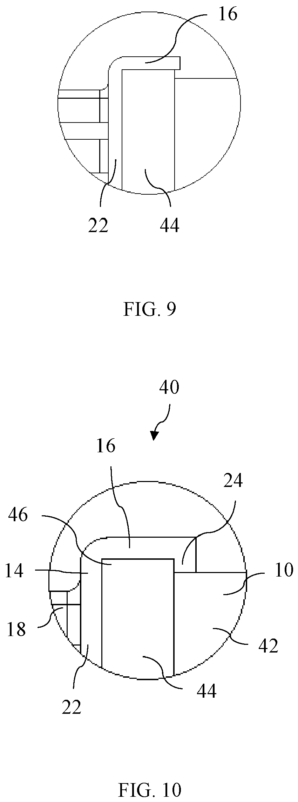

FIG. 8 is a schematic partial assembled view of the filter device in FIG. 7. FIG. 9 is a schematic enlarged view of A in FIG. 8. FIG. 10 is a schematic enlarged view of B in FIG. 3. Referring to FIGS. 8, 9 and 10, in some embodiments, the connecting part 16 together with the body part 22 is nestably engageable with the frame 44.

In this manner, the coupling force between the mounting panel 14 and the filter element 10 can be facilitated to be enhanced.

The connecting part 16 together with the body part 22 can nest different positions of the frame 44 from a same direction or different directions, so a coupling force is relatively strong.

Yet another aspect of the embodiments of the present application relates to a filter device 40 mountable to a housing 12, the filter device 40 comprising: a filter element 10 comprising a filter part 42 and a frame 44 at the filter part 42; and a mounting panel 14 comprising: a body part 22; a connecting part 16 located at an end side of the body part and being detachably connectable to the filter element 10; and a mounting part 18 located on the body part 22 and being detachably engageable with the housing 12, the connecting part 16 comprising a bending part 24 located at an end part thereof and extending substantially parallel to the body part 22, the frame 44 comprising a protruding part 46 nestbale among the body part 22, the connecting part 16 and the bending part 24.

By doing such, the coupling force between the mounting panel 14 and the filter element 10 can be enhanced, which helps to improve the structural stability of the filter device 40.

The body part 22, the connecting part 16, and the bending part 24 can together nest the protruding part 46. The protruding part 46 can be a part of the frame 44 protruding with respect to the filter part 42. The bending part 24 can abut against the filter part 42.

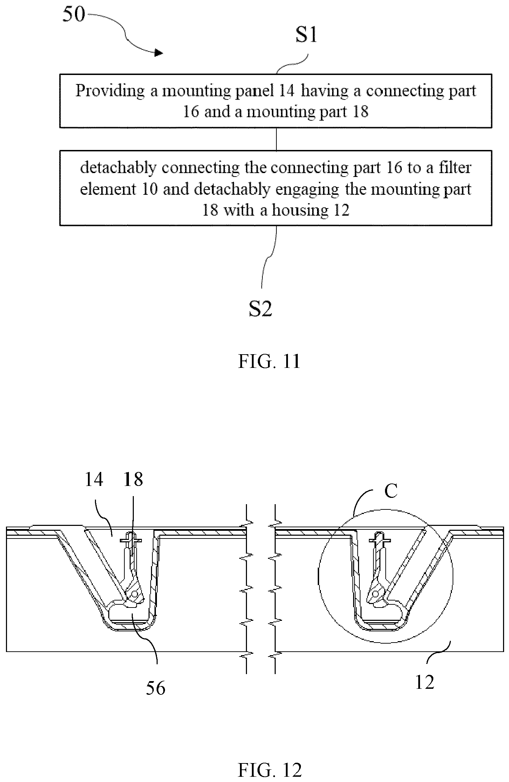

FIG. 11 is a schematic flowchart of the mounting method in another aspect of embodiments of the present application. As shown in FIG. 11, in yet another aspect of the embodiments the present application relates to a mounting method 50 comprising the steps of: S1 providing a mounting panel 14 as described in the present application; and S2 detachably connecting the connecting part 16 of the mounting panel 14 to a filter element 10 and detachably engaging the mounting part 18 of the mounting panel 14 with a housing 12.

In some embodiments the connection of the connecting part 16 to the filter element 10 can be carried out before, simultaneously, or after the engagement of the mounting part 18 with the housing 12.

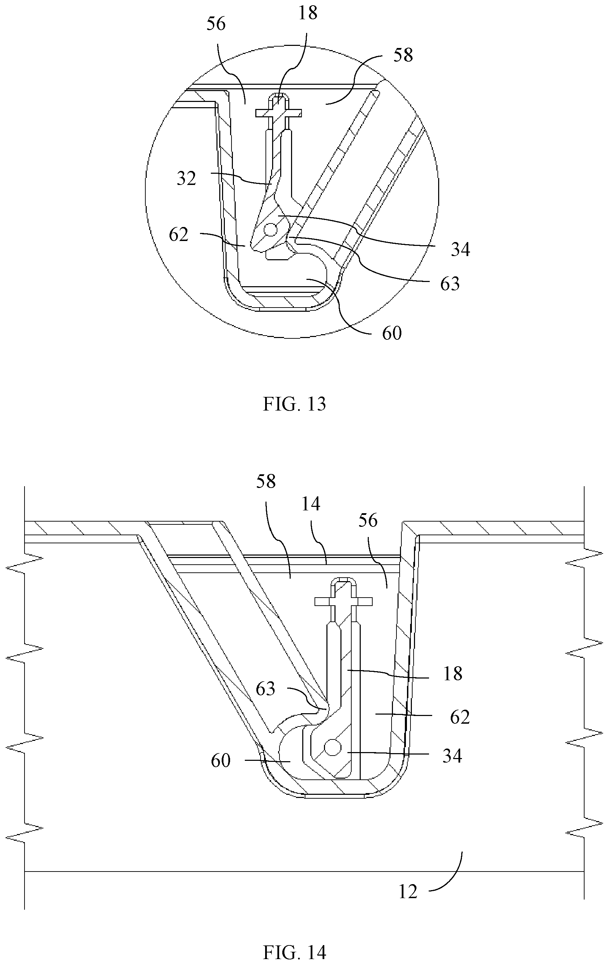

FIG. 12 is a schematic partial cross-sectional view of the mounting panel and the housing in FIG. 1. FIG. 13 is a schematic enlarged view of C in FIG. 11. FIG. 14 is another schematic partial cross-sectional view of the mounting panel and the housing in FIG. 1. Referring to FIGs. 12-14, in some embodiments, the housing 12 includes an engaging groove 56. The engaging groove 56 includes a guiding part 58, a receiving part 60 communicating with the guiding part 58, and a neck part 62. The neck part 62 communicates with the guiding part 58 and the receiving part 60 and is smaller in size than the guiding part 58 and the receiving part 60. In the course of mounting, the mounting part 18 enters into the housing 12 from the guiding part 58, deforms and passes through the neck part 62 till its entry into the receiving part 60, and recovers from the deformation so as to engage the mounting part 18 with the engaging groove 56.

The guiding part 58 can communicate with the outside. The guiding part 58 can have an inner wall surface extending obliquely. The guiding part 58 can be gradually reduced in size in a direction extending toward the neck part 62. The protrusion 34 of the mounting part 18 can include a first slope parallel to the inclination direction of the inclined inner wall surface of the guiding part 50 (58), a second slope intersecting the inclination direction of the inclined inner wall surface of the guiding part 50 (58), and a transition part between the first slope and the second slope.

In the process that the mounting panel 14 and the housing 12 approach each other, the protrusion 34 of the mounting part 18 is obstructed and squeezed by the inner wall 63 of the neck part 62 when reaching the neck part 62, and the cantilever 32 is displaced and deformed, so that the first slope and the transition part of the protrusion 34 can pass along the inner wall 63 and through the neck part 62. After the protrusion 34 enters the receiving part 60, the size of the part of the cantilever 32 corresponding to the neck part 62 is smaller than that of the protrusion 34, and the cantilever 32 is not squeezed anymore and recovers from deformation.

The inner wall 63 can contact the second slope to restrain the protrusion 34 within the receiving part 60 when the mounting panel 14 and the housing 12 are not required to be separated. When the mounting panel 14 and the housing 12 need to be separated, the cantilever 32 can be displaced, deformed so that the protrusion 34 can avoid the contact with inner wall 63, pass through the neck part 62, exit the receiving part 60, and then exit the engaging groove 56 through the guiding part 58.

The various specific embodiments described above and shown in the accompanying drawings are only for the purpose of explaining the present application and shall not read as the all embodiments of the present application. Any changes or alterations made by ordinary technical personnel in the relevant technical field derived from conception of the present application shall be read as a portion of application and are within the scope of protection of this application.

## Claims

1. A mounting panel (14) that is capable of mounting a filter element (10) to a housing (12), the mounting panel (14) comprising:
a body part (22);
a connecting part (16) located at an end side of the body part (22) and being detachably connectable to the filter element (10); and
a mounting part (18) configured on the body part (22) and being detachably engageable with the housing (12).

2. The mounting panel (14) as claimed in claim 1, wherein the body part (22) and the connecting part (16) are such arranged that a substantially U-shaped or L-shaped configuration is formed.

3. The mounting panel (14) as claimed in claim 1, wherein the connecting part (16) extends in a direction substantially perpendicular to the body part (22).

4. The mounting panel (14) as claimed in claim 3, wherein the connecting part (16) comprises a bending part (24) located at an end side thereof and extending in a direction substantially parallel to the body part (22).

5. The mounting panel (14) as claimed in claims 3 or 4, wherein the mounting part (18) comprises at least one hook (28) protruding over the body part (22) in a direction away from the connecting part (16).

6. The mounting panel (14) as claimed in claim 5, wherein the hook (28) comprises an extending part (30) extending in a direction away from the connecting part (16) and a cantilever (32) extending substantially perpendicular to the extending part (30).

7. The mounting panel (14) as claimed in claim 6, wherein the hook (28) comprises a protrusion (34) on the cantilever (32).

8. The mounting panel (14) as claimed in claims 6 or 7, wherein the cantilever (32) is configured to be displaceable relative to the extending part (30) and the body part (22).

9. The mounting panel (14) as claimed in any one of claims 6 to 8, wherein the cantilever (32) is elastically deformable.

10. The mounting panel (14) as claimed in claim 7, wherein the body part (22) comprises a through hole (36) configured to allow the cantilever (32) and the protrusion (34) to pass through.

11. The mounting panel (14) as claimed in any one of claims 5 to 10, wherein the number of the hooks (28) is greater than or equal to 2.

12. A filter device (40) mountable to a housing (12), the filter device (40) comprising:
a filter element (10); and
the mounting panel (14) as claimed in any one of claims 1-11.

13. The filter device (40) as claimed in claim 12, wherein the filter element (10) comprises a filter part (42) and a frame (44) at the filter part (42), the connecting part (16) being nestably engageable with the frame (44).

14. The filter device (40) as claimed in claim 13, wherein the connecting part (16) is interferentially engageable with the frame (44).

15. The filter device (40) as claimed in claims 13 or 14, wherein both the connecting part (16) and the body part (22) are nestably engageable with the frame (44).

16. A filter device (40) mountable to a housing (12), the filter device (40) comprising:
a filter element (10) comprising a filter part (42) and a frame (44) at the filter part (42); and
a mounting panel (14) comprising: a body part (22); a connecting part (16) located at an end side of the body part and being detachably connectable to the filter element (10); and a mounting part (18) configured on the body part (22) and being detachably engageable with the housing (12), the connecting part (16) comprising a bending part (24) located at an end part thereof and extending substantially parallel to the body part (22), the frame (44) comprising a protruding part (46) nestable among the body part (22), the connecting part (16) and the bending part (24).

17. A mounting method (50) comprising the steps of:
(S1) providing a mounting panel (14) as claimed in any one of claims 1 to 11; and
(S2) detachably connecting the connecting part (16) of the mounting panel (14) to a filter element (10) and detachably engaging the mounting part (18) of the mounting panel to a housing (12).

18. The mounting method (50) as claimed in claim 17, wherein the housing (12) comprises an engaging groove (56), and the engaging groove (56) comprises a guiding part (58), a receiving part (60) in communication with the guiding part (58), and a neck part (62) in communication with the guiding part (58) and with the receiving part (60) and being smaller in size than the guiding part (58) and the receiving part (60), and wherein step (S2) comprises: entering the mounting part (18) into the guiding part (58), deforming and passing the mounting part (18) through the neck part (62) till entry into the receiving part (60), and recovering the deformation of the mounting part (18) to engage the mounting part (18) with the engaging groove (56) .
